# EUROPÄISCHE PATENTSCHRIFT

(11) **EP 3 599 356 B1**
(45) Veröffentlichungstag und Bekanntmachung des Hinweises auf die Patenterteilung: **07.06.2023**
(21) Anmeldenummer: 19184509.8
(22) Anmeldetag: 04.07.2019
(51) Int. Cl.: F02B 21/00, F02D 13/02, F04B 41/04, F02M 21/02

(54) **VORRICHTUNG FÜR EINE BRENNKRAFTMASCHINE MIT EINER ZUSATZVENTILEINHEIT**
DEVICE FOR A COMBUSTION ENGINE WITH AN ADD-ON VALVE UNIT
DISPOSITIF POUR UN MOTEUR À COMBUSTION INTERNE DOTÉ D'UNE UNITÉ DE SOUPAPE SUPPLÉMENTAIRE

(30) Priorität: 23.07.2018 AT 2182018
(43) Veröffentlichungstag der Anmeldung: 29.01.2020
(73) Patentinhaber: MAN Truck & Bus SE, 80995 München (DE)
(72) Erfinder: Raab, Gottfried, 4320 Perg (AT); Hundsberger, Ewald, 4421 Aschach / Steyr (AT); Schatzberger, Thorolf, 4400 Steyr (AT)
(74) Vertreter: v. Bezold & Partner Patentanwälte - PartG mbB

(56) Entgegenhaltungen:
- FR-A1- 2 916 242
- US-A- 3 958 900
- US-A1- 2014 261 328

## Beschreibung

Die Erfindung betrifft eine Vorrichtung für eine Brennkraftmaschine für ein Kraftfahrzeug, vorzugsweise ein Nutzfahrzeug, mit mehreren Ladungswechselventilen, einem ersten Fluidsystem, einem zweiten Fluidsystem und einer Zusatzventileinheit.

Es ist bekannt, neben den herkömmlichen Ladungswechselventilen ein zusätzliches Zusatzventil zum Beispiel in einem Zylinderkopf einer Brennkraftmaschine anzuordnen. Über das Zusatzventil kann beispielsweise Druckluft aus dem Zylinder zur Weiterverwendung entnommen werden.

DE 198 49 914 C1 betrifft eine mehrzylindrige Brennkraftmaschine, die je Zylinder mindestens einen Einlasskanal und ein Einlassventil, einen Auslasskanal und ein Auslassventil und mindestens ein separat betätigbares Zusatzventil besitzt. Das Zusatzventil ist im Zylinderkopf der Brennkraftmaschine angeordnet. Mit dem Zusatzventil ist eine Gasströmung in einer Leitung steuerbar. Die Leitung von dem Zusatzventil eines ersten Zylinders ist mit mindestens einem zweiten Zylinder unmittelbar oder mittelbar verbunden und mit dem Zusatzventil ist eine Gasströmung vom ersten Zylinder in den zweiten Zylinder in eine Druckluftanlage und/oder in eine Turbine steuerbar.

Die WO 2009/100883 A1 offenbart ein Verfahren zum Erzeugen von Druckluft und Einblasen derselben bei einer Verbrennungskraftmaschine mit einem Abgasturbolader. Das Verfahren weist ein Ermitteln von Betriebsparametern der Verbrennungskraftmaschine zum Bestimmen von Betriebszuständen der Verbrennungskraftmaschine und ein Erzeugen von Druckluft durch die Verbrennungskraftmaschine anhand der ermittelten Betriebsparameter in einem verbrennungslosen Betriebszustand auf. Das Verfahren weist ferner ein Speichern der erzeugten Druckluft und ein Einblasen der gespeicherten Druckluft in die Verbrennungskraftmaschine anhand der ermittelten Betriebsparameter in einem Verbrennungsbetriebszustand der Verbrennungskraftmaschine zur Druckerhöhung in einem Ansaugtakt auf.

Die FR 2 916 242 A1 offenbart ein Verfahren zum Steuern der Leistung eines Wärmemotors, umfassend mindestens einen Zylinder, der mit einem Einlassventil ausgestattet ist, das mit einem Einlasskanal verbunden ist, und ein Auslassventil, das mit einem Auslasskanal verbunden ist. Das Verfahren umfasst den Schritt des Einleitens von Druckgas direkt in den mindestens einen Zylinder während einer Betriebsphase des Wärmemotors unter Verwendung eines Ventils mit unabhängiger Steuerung.

Die US 3,958,900 A offenbart eine Kraftmaschine, die eine Luftkompressionsmaßnahme durchführen kann. Die Kraftmaschine benötigt ein Luftzufuhrmittel, um die Kraftstoffzufuhr zu einer oder mehreren Kammern zu stoppen und sie nur mit Luft zu versorgen, ein Luftentnahmemittel, um zu einem gewünschten Zeitpunkt die in den Kammern komprimierte Luft zu entnehmen, und einen Tank zum Speichern der Druckluft. Der Tank ist mit einem Abgasrohr verbunden, das einen Teil des Luftentnahmemittels bildet. Das Luftzufuhrmittel ist ein Mittel zum Versorgen der Kammern mit Luft nur durch Stoppen der Kraftstoffzufuhr.

Die US 2014/261328 A1 offenbart einen Verbrennungsmotor aufweisend eine Brennkammer, einen Drucktank in Fluidverbindung mit der Brennkammer und ein Drucksteuerventil, das zwischen dem Drucktank und der Brennkammer angeschlossen ist, wobei das Ventil zur Steuerung eines Fluidstroms zwischen dem Drucktank und der Brennkammer betreibbar ist.

Der Erfindung liegt die Aufgabe zu Grunde, eine alternative und/oder verbesserte Vorrichtung mit Zusatzventil zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Vorrichtung ist für eine Brennkraftmaschine für ein Kraftfahrzeug, vorzugsweise ein Nutzfahrzeug (zum Beispiel Lastkraftwagen oder Omnibus) geeignet. Die Vorrichtung weist mehrere Ladungswechselventile zum Zuführen von Verbrennungsluft (und z. B. ggf. Kraftstoff) zu einer Verbrennungskammer (zum Beispiel von mehreren Verbrennungskammern) der Brennkraftmaschine und Abführen von Abgas aus der Verbrennungskammer auf. Die Vorrichtung weist ein erstes Fluidsystem, das als eines von einem Druckluftsystem, einem Abgassystem oder einem Kraftstoffzufuhrsystem ausgebildet ist, auf. Die Vorrichtung weist ein zweites Fluidsystem, das als ein anderes von dem Druckluftsystem, dem Abgassystem oder dem Kraftstoffzufuhrsystem ausgebildet ist, auf. Die Vorrichtung weist zudem eine Zusatzventileinheit auf, mittels der eine (z. B. erste) Fluidverbindung zwischen der Verbrennungskammer und dem ersten Fluidsystem und eine (z. B zweite) Fluidverbindung zwischen der Verbrennungskammer und dem zweiten Fluidsystem herstellbar ist.

Die Vorrichtung bietet den Vorteil, dass die Zusatzventileinheit multifunktional verwendbar ist. Über die Zusatzventileinheit kann sowohl das erste Fluidsystem, zum Beispiel das Druckluftsystem, als auch das zweite Fluidsystem, zum Beispiel das Abgassystem, eine Fluidverbindung mit der Verbrennungskammer herstellen. Über die Zusatzventileinheit kann sowohl ein Fluid (zum Beispiel Kraftstoff oder Spülgas) zu der Verbrennungskammer zugeführt als auch ein Fluid (zum Beispiel Druckluft oder Abgas) aus der Verbrennungskammer abgeführt werden. Bei Verbindung der Zusatzventileinheit mit dem Druckluftsystem als das erste Fluidsystem oder das zweite Fluidsystem ist es möglich, einen herkömmlichen Luftverdichter zu ersetzen. Bei Verbindung der Zusatzventileinheit mit dem Kraftstoffzufuhrsystem als das erste Fluidsystem oder das zweite Fluidsystem ist es möglich, eine Zweikraftstoff-Brennkraftmaschine ("Dual-Fuel- Brennkraftmaschine") zu schaffen, wobei einer der zwei Kraftstoffe über die Zusatzventileinheit zuführbar ist. Bei Verbindung der Zusatzventileinheit mit dem Abgassystem als das erste Fluidsystem oder das zweite Fluidsystem ist es möglich, sich auf die Abgastemperatur beziehende Thermomanagementverfahren der Brennkraftmaschine verbessert vorzusehen.

In einem Ausführungsbeispiel weist die Vorrichtung ein drittes Fluidsystem auf, das als ein weiteres anderes (verbleibendes) von dem Druckluftsystem, dem Abgassystem oder dem Kraftstoffzufuhrsystem ausgebildet ist. Vorzugsweise kann mittels der Zusatzventileinheit eine (z. B. dritte) Fluidverbindung zwischen der Verbrennungskammer und dem dritten Fluidsystem herstellbar sein. Damit ermöglicht die Zusatzventileinheit das Herstellen einer Fluidverbindung zwischen der Verbrennungskammer und drei unterschiedlichen Fluidsystem zum wahlweisen Zuführen und Abführen von unterschiedlichen Fluiden entsprechend dem jeweiligen Fluidsystem.

In einem weiteren Ausführungsbeispiel weist die Vorrichtung ein weiteres Fluidsystem, das vorzugsweise als ein Spülgassystem ausgebildet ist, auf. Vorzugsweise kann mittels der Zusatzventileinheit eine (z. B. weitere) Fluidverbindung zwischen der Verbrennungskammer und dem weiteren Fluidsystem herstellbar sein. Das Spülgassystem kann den Vorteil bieten, dass beispielsweise die Fluidleitungen und die Zusatzventileinheit bei Umschaltung zwischen dem ersten, zweiten und/oder dritten Fluidsystem zunächst gespült werden können, zum Beispiel zum Ausspülen von Abgas- oder Kraftstoffresten.

In einem weiteren Ausführungsbeispiel weist die Vorrichtung eine Umschalteinrichtung auf, die zum wahlweisen Umschalten der (z. B. ersten, zweiten, dritten und/oder weiteren) Fluidverbindungen angeordnet ist. Die Umschalteinrichtung kann bspw. sicherstellen, dass entweder keines oder immer nur ein Fluidsystem (zum Beispiel das erste, zweite, dritte oder vierte Fluidsystem) in Fluidverbindung mit der Zusatzventileinheit steht.

Beispielsweise kann die Umschalteinrichtung zwischen der Zusatzventileinheit einerseits und dem ersten, zweiten, dritten und/oder weiteren Fluidsystem andererseits angeordnet sein.

In einer Weiterbildung weist die Umschalteinrichtung eines oder mehrere Ventile, vorzugsweise Schaltventile (zum Beispiel Absperrventile), auf.

In einer Ausführungsform ist das Druckluftsystem zum Aufnehmen von über die Zusatzventileinheit aus der Verbrennungskammer entnommener Druckluft zum pneumatischen Antreiben und/oder Betätigen weiterer Komponenten (zum Beispiel einer Bremseinrichtung und/oder einer Luftfederung), vorzugsweise des Kraftfahrzeugs, ausgebildet.

In einer weiteren Ausführungsform ist das Abgassystem zum Aufnehmen und Abführen von über die Zusatzventileinheit aus der Verbrennungskammer entnommenem Abgas ausgebildet. Es ist beispielsweise möglich, dass dieses Abgassystem einem Abgassystem entspricht, das stromabwärts von einem oder mehreren Auslassventilen der Ladungswechselventile angeordnet ist, oder in dieses mündet.

In einer weiteren Ausführungsform ist das Kraftstoffzufuhrsystem (z. B. eines Zweikraftstoff-Zufuhrsystems - "Dual Fuel"-System) zum Zuführen von, vorzugsweise gasförmigen, Kraftstoff (zum Beispiel Erdgas) über die Zusatzventileinheit zu der Verbrennungskammer ausgebildet.

In einer weiteren Ausführungsform ist das Spülgassystem zum Zuführen eines Spülgases (z. B. Reinluft, Inertgas usw.) zu der Zusatzventileinheit und/oder der Umschalteinrichtung ausgebildet. Es kann auch möglich sein, das Druckluftsystem als das Spülgassystem zu verwenden.

In einer weiteren Ausführungsform ist die Zusatzventileinheit in einem Zylinderkopf, vorzugsweise brennraumbündig oder in einem Sackloch zurückversetzt, angeordnet. Damit kann das Zusatzventil eine direkte Fluidverbindung mit der Verbrennungskammer herstellen.

In einer weiteren Ausführungsform ist mittels der Zusatzventileinheit eine Fluidverbindung zwischen der Verbrennungskammer und einem Zusatzfluidkanal in einem Zylinderkopf herstellbar.

Beispielsweise kann der Zusatzfluidkanal zumindest einen Abschnitt einer Fluidverbindung zwischen der Zusatzventileinheit und der Umschalteinrichtung bilden.

In einer weiteren Ausführungsform sind die mehreren Ladungswechselventile in einem Zylinderkopf angeordnet.

In einer Ausführungsvariante ist die Zusatzventileinheit separat von den mehreren Ladungswechselventilen ausgebildet. Alternativ oder zusätzlich ist die Zusatzventileinheit ein einziges Ventil (z. B. Tellerventil) und/oder weist einen einzigen bewegbaren Ventilkörper (z. B. Ventilnadel oder Ventilschaft mit Teller) auf.

In einer weiteren Ausführungsvariante ist die Zusatzventileinheit mittels eines Ventiltriebs (z. B. aufweisend eine Nockenwelle) betätigbar, der ebenfalls mindestens eines der mehreren Ladungswechselventile (z. B. Auslassventil oder Einlassventil) betätigt. Erfindungsgemäß ist die Zusatzventileinheit mittels eines Hebels, vorzugsweise eines Kipphebels oder eines Schlepphebels, eines Ventiltriebs betätigbar.

Erfindungsgemäß weist der Hebel eine, vorzugsweise hydraulische, Leerweg-Vorrichtung zum selektiven Zuschalten der Zusatzventileinheit auf.

Zum Beispiel kann die Leerweg-Vorrichtung, wenn aktiviert oder deaktiviert, selektiv eine Wirkverbindung zu einer Nockenkontur einer Nockenwelle herstellen oder eine Wirkverbindung zu der Nockenkontur trennen.

Es ist auch möglich, dass die Leerweg-Vorrichtung zusätzlich oder alternativ elektrisch, pneumatisch und/oder mechanisch betrieben ist.

Bspw. kann die Leerweg-Vorrichtung einen sperrbaren, bewegbaren Kolben aufweisen.

In einem weiteren Ausführungsbeispiel ist die Zusatzventileinheit separat von den mehreren Ladungswechselventilen betätigbar, vorzugsweise pneumatisch, elektrisch (z. B. elektromagnetisch, elektromotorisch), hydraulisch und/oder mechanisch.

In einem Ausführungsbeispiel weist die Vorrichtung eine Steuereinheit auf, die dazu ausgebildet ist, die Umschalteinrichtung und/oder die Zusatzventileinheit wahlweise zu betreiben in einem Drucklufterzeugungsmodus, in dem Druckluft aus der Verbrennungskammer mittels der Zusatzventileinheit zu dem Druckluftsystem zuführbar ist oder zugeführt wird, und/oder in einem Thermomanagementmodus (z. B. Abgastemperaturveränderungsmodus, vorzugsweise Abgastemperaturerhöhungsmodus), in dem Abgas aus der Verbrennungskammer mittels der Zusatzventileinheit zu dem Abgassystem zuführbar ist oder zugeführt wird. Es ist auch möglich, die Umschalteinrichtung und/oder die Zusatzventileinheit wahlweise zu betreiben in einem Kraftstoffzufuhrmodus, in dem Kraftstoff von dem Kraftstoffzufuhrsystem in die Verbrennungskammer mittels der Zusatzventileinheit zuführbar ist oder zugeführt wird, und/oder in einem Spülmodus, in dem Spülgas zu der Zusatzventileinheit und/oder der Umschalteinrichtung (und/oder des Zusatzfluidkanals) zum Spülen der Zusatzventileinheit und/oder der Umschalteinrichtung (und/oder des Zusatzfluidkanals) von dem Spülgassystem zuführbar ist oder zugeführt wird.

Zweckmäßig kann sich der Begriff "Steuereinheit" auf eine Elektronik und/oder mechanische Steuerung beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

In einem weiteren Ausführungsbeispiel ist die Druckluft im Drucklufterzeugungsmodus während eines Kompressionstaktes aus der Verbrennungskammer entnehmbar oder wird entnommen.

In einem weiteren Ausführungsbeispiel ist im Thermomanagementmodus zur Erhöhung einer Abgastemperatur eine Öffnung mindestens eines Auslassventils der mehreren Ladungswechselventile gegenüber einem Normalmodus vorgezogen (z. B. mittels eines Nockenwellenphasenverstellers; z. B. kann damit auch der Schließzeitpunkt vorgezogen werden) und/oder restliches Abgas in der Verbrennungskammer ist am Ende eines Auslasstaktes über die Zusatzventileinheit abführbar oder wird abgeführt. Damit wird das restliche Abgas am Ende des Auslasstaktes nicht in der Zylindereinheit verdichtet.

In einer weiteren Ausführungsform wird im Kraftstoffzufuhrmodus ein, vorzugsweise gasförmiger, Kraftstoff, vorzugsweise im Einlasstakt, zu der Verbrennungskammer mittels der Zusatzventileinheit zugeführt oder ist zuführbar, vorzugsweise zum Zünden (z. B. eines Kraftstoff-Luft-Gemischs) und/oder Verbrennen (z. B. als Hauptbrennstoff) in der Verbrennungskammer.

Die Erfindung ist auch auf ein Kraftfahrzeug, vorzugsweise ein Nutzfahrzeug (zum Beispiel Lastkraftwagen oder Omnibus), mit einer Vorrichtung wie hierin offenbart gerichtet.

Es ist auch möglich, die Vorrichtung wie hierin offenbart für Personenkraftwagen, Großmotoren, geländegängige Fahrzeuge, stationäre Motoren, Marinemotoren usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Zeichnung beschrieben. Es zeigt:

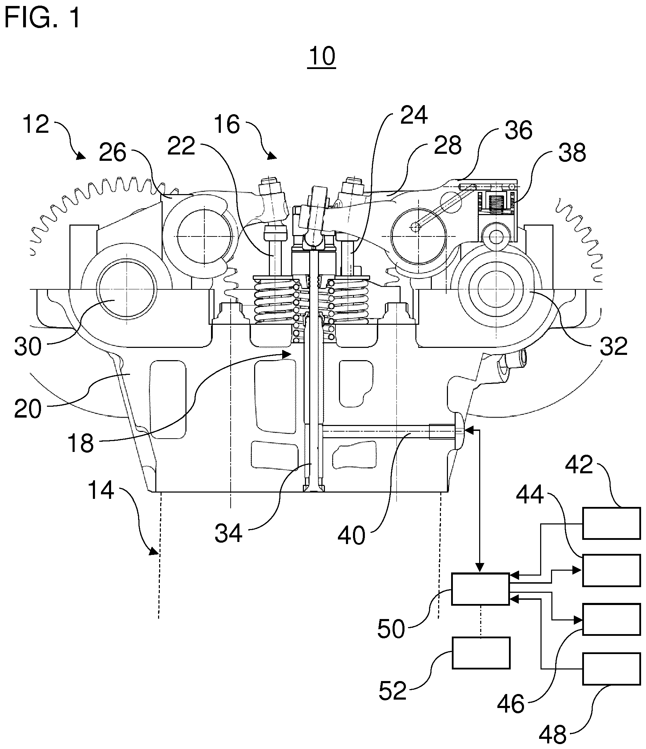

- Figur 1: eine schematische Schnittdarstellung einer Vorrichtung gemäß der vorliegenden Offenbarung.

Die Figur 1 zeigt eine Vorrichtung 10 für eine Brennkraftmaschine, vorzugsweise eine Hubkolben-Brennkraftmaschine, insbesondere eines Kraftfahrzeugs. Die Brennkraftmaschine kann als eine Einkraftstoff-Brennkraftmaschine, zum Beispiel als Diesel-Brennkraftmaschine oder Benzin-Brennkraftmaschine, ausgebildet sein. Es ist auch möglich, dass die Brennkraftmaschine als eine Zweikraftstoff-Brennkraftmaschine, zum Beispiel als eine Brenngas-Diesel-Brennkraftmaschine oder eine Brenngas-Benzin-Brennkraftmaschine, ausgebildet ist. Als Brenngas kann beispielsweise Erdgas verwendet werden. Die Brennkraftmaschine kann eine oder mehrere Zylindereinheiten 12 mit jeweils einer Verbrennungskammer 14 aufweisen. In Figur 1 ist rein beispielhaft nur ein Teil einer Zylindereinheit 12 dargestellt. Das Kraftfahrzeug kann zweckmäßig ein Nutzfahrzeug, insbesondere ein Lastkraftwagen oder ein Omnibus, sein.

Die Vorrichtung 10 weist mehrere Ladungswechselventile 16 und eine Zusatzventileinheit 18 auf. Die Zusatzventileinheit 18 ist separat zu den Ladungswechselventile 16 vorgesehen. Die Ladungswechselventile 16 und die Zusatzventileinheit 18 sind in einem Zylinderkopf 20 der Zylindereinheit 12 angeordnet.

Die Ladungswechselventile 16 umfassen mindestens ein Einlassventil 22 und mindestens ein Auslassventil 24. Die Ladungswechselventile 16 können beispielsweise als Tellerventile ausgebildet sein. Über das mindestens eine Einlassventil 22 kann Luft oder ein Luft-KraftstoffGemisch in die Verbrennungskammer 14 der Zylindereinheit 12 zugeführt werden. Über das mindestens eine Auslassventil 24 kann Abgas aus der Verbrennungskammer 14 abgeführt werden. Die Ladungswechselventile 16 sind über Kipphebel 26, 28 von Nockenwellen 30, 32 betätigt. Alternativ könnten beispielsweise auch andere Kraftübertragungsmechanismen verwendet werden, zum Beispiel Schlepphebel oder Stößel.

Die Zusatzventileinheit 18 weist in der gezeigten Ausführungsform ein einziges Ventil mit einem bewegbaren Ventilkörper 34 auf. Die Zusatzventileinheit 18 ist als ein Tellerventil ausgebildet, insbesondere mit geringerem Tellerdurchmesser als die Ladungswechselventile 16. Die Zusatzventileinheit 18 ist brennraumbündig im Zylinderkopf 20 angeordnet. Es ist beispielsweise auch möglich, die Zusatzventileinheit 18 in einem Sackloch zurückversetzt im Zylinderkopf 20 anzuordnen.

In der dargestellten Ausführungsform ist die Zusatzventileinheit 18 von der Nockenwelle 32 über einen Kipphebel 36, der um die gleiche Kipphebelachse schwenkbar ist, wie der Kipphebel 28, betätigbar. Um die Zusatzventileinheit 18 zur Betätigung durch die Nockenwelle 32 selektiv zuzuschalten, ist eine Leerweg-Vorrichtung (Lost-Motion-Vorrichtung) 38 vorgesehen. Die Leerweg-Vorrichtung 38 ist in den Kipphebel 36 integriert, beispielsweise nockenwellenseitig oder zusatzventilseitig. Es ist auch möglich, die Leerweg-Vorrichtung 38 in einen Schlepphebel eines alternativen Ventiltriebs zu integrieren. In anderen, nicht erfindungsgemäßen Alternativen wäre auch möglich, die Leerweg-Vorrichtung 38 an einer anderen Stelle im Ventiltrieb oder einem alternativen Ventiltrieb, zum Beispiel aufweisend einen Stößel, zu integrieren.

In einem aktivierten Zustand der Leerweg-Vorrichtung 38 wird eine Nockenkontur der Nockenwelle 32 über den Kipphebel 36 auf den bewegbaren Ventilkörper 34 übertragen. In einem deaktivierten Zustand der Leerweg-Vorrichtung 38 ist eine Bewegung eines bewegbaren Kolbens 38 der Leerweg-Vorrichtung 38 freigegeben, sodass die Nockenkontur der Nockenwelle kompensiert wird. Die Leerweg-Vorrichtung 38 kann, wie dargestellt ist, beispielsweise hydraulisch aktivierbar und deaktivierbar sein. Beispielsweise kann die Zuführung einer Hydraulikflüssigkeit zu der Leerweg Vorrichtung 38 eine Bewegung des bewegbaren Kolbens freigegeben oder sperren.

Es ist auch möglich, dass die Zusatzventileinheit 18 vollkommen separat von den Ladungswechselventilen 16 und/oder den Nockenwellen 30, 32 betätigbar ist. Zum Beispiel kann die Zusatzventileinheit 18 pneumatisch, hydraulisch und/oder elektrisch (zum Beispiel elektromagnetisch oder elektromotorisch) betätigbar sein.

Im geöffneten Zustand der Zusatzventileinheit 18 wird eine Fluidverbindung zwischen der Verbrennungskammer 14 und einem Zusatzfluidkanal 40 im Zylinderkopf 20 hergestellt. Im geschlossenen Zustand der Zusatzventileinheit 18 wird eine Fluidverbindung zwischen der Verbrennungskammer 14 und dem Zusatzfluidkanal 40 getrennt. Der Zusatzfluidkanal 40 ist separat von dem einen oder den mehreren Einlasskanälen im Zylinderkopf 20 für das mindestens eine Einlassventil 22 und separat von dem einen oder den mehreren Auslasskanälen im Zylinderkopf 20 für das mindestens eine Auslassventil 24 vorgesehen.

Gemäß der vorliegenden Offenbarung kann die Zusatzventileinheit 18 multifunktional verwendet werden, um wahlweise Fluidverbindungen zwischen der Verbrennungskammer 14 und mindestens zwei weiteren Fluidsystemen herzustellen.

In der dargestellten Ausführungsform weist die Vorrichtung 10 ein Kraftstoffzufuhrsystem 42, ein Abgassystem 44, ein Druckluftsystem 46 und ein Spülgassystem 48 auf. In anderen Ausführungsformen können alternative, weniger oder zusätzliche Fluidsysteme zur Verbindung mit der Zusatzventileinheit 18 vorgesehen sein.

Zwischen der Zusatzventileinheit 18 und den Systemen 42-48 ist eine Umschalteinrichtung 50 geschaltet. Die Umschalteinrichtung 50 kann eines oder mehrere parallel oder in Reihe geschalteten Ventile zum Umschalten aufweisen. Die Umschalteinrichtung 50 kann wahlweise eine Fluidverbindung zwischen dem Zusatzfluidkanal 40 und dem Kraftstoffzufuhrsystem 42, dem Abgassystem 44, dem Druckluftsystem 46 oder den Spülgassystem 48 herstellen.

Das Kraftstoffzufuhrsystem 42 kann zum Zuführen eines Kraftstoffs über die Umschalteinrichtung 50, den Zusatzfluidkanal 40 und die Zusatzventileinheit 18 in die Verbrennungskammer 14 ausgebildet sein. Das Kraftstoffzufuhrsystem 42 kann einen Kraftstofftank (nicht dargestellt) zum Speichern von Kraftstoff aufweisen. Der Kraftstoff kann beispielsweise ein gasförmiger Kraftstoff, zum Beispiel Erdgas, sein. Das Kraftstoffzufuhrsystem 42 kann Teil eines Zweikraftstoffzufuhrsystems sein, sodass die Brennkraftmaschine als Zweikraftstoff-Brennkraftmaschinen betreibbar ist. Beispielsweise kann die Brennkraftmaschine mit einem ersten Kraftstoff, zum Beispiel Diesel oder Benzin, über entsprechende Einspritzventile im Zylinderkopf (nicht dargestellt), betrieben werden. Zusätzlich kann die Brennkraftmaschine mit einem alternativen zweiten Kraftstoff, zum Beispiel Erdgas, von dem Kraftstoffzufuhrsystem 42, der der Verbrennungskammer 14 über die Zusatzventileinheit 18 zugeführt wird, betrieben werden.

Das Abgassystem 44 kann zum Abführen von Abgas in die Umgebung ausgebildet sein. Das Abgassystem 44 kann einem Abgassystem entsprechen, das stromabwärts des mindestens einen Auslassventils 24 angeordnet ist. Das Abgassystem 44 kann weitere Komponenten aufweisen, zum Beispiel eine oder mehrere Turbinen einer Turboladervorrichtung und/oder ein Abgasnachbehandlungssystem, zum Beispiel aufweisend einen oder mehrere Partikelfilter und/oder einen oder mehrere Katalysatoren.

Das Druckluftsystem 46 kann zum Speichern von Druckluft und pneumatischen Antreiben bzw. Betätigen weiterer Komponenten, insbesondere des Kraftfahrzeugs, ausgebildet sein. Zum Beispiel kann eine Bremsvorrichtung und/oder eine Luftfederung des Kraftfahrzeugs pneumatisch betätigt sein. Das Druckluftsystem 46 kann einen zusätzlichen Luftverdichter zum Verdichten von Umgebungsluft aufweisen. Es ist auch möglich, dass das Druckluftsystem 46 keinen Luftverdichter aufweist und lediglich mit Druckluft, die über die Zusatzventileinheit 18 und die Umschalteinrichtung 50 zugeführt wird, betrieben wird.

Das Spülgassystem 48 kann zum Spülen der Umschalteinrichtung 50, der Zusatzventileinheit 18 und/oder der Fluidleitungen (zum Beispiel umfassend den Zusatzfluidkanal 40) zwischen der Umschalteinrichtung 50 und der Zusatzventileinheit 18 ausgebildet sein. Beispielsweise kann mittels des Spülgassystems 48 ein Spülgas zugeführt werden. Das Spülgas kann beispielsweise ein Inertgas oder Luft sein. Das Spülgassystem 48 kann insbesondere immer dann verwendet werden, wenn von der Umschalteinrichtung 50 zwischen den Systemen 42-46 umgeschaltet wird, um beispielsweise Abgasreste oder Kraftstoffreste auszuspülen. Das von dem Spülgassystem 48 zugeführte Spülgas kann beispielsweise über die geöffnete Zusatzventileinheit 18 in die Verbrennungskammer 14 gelangen und von dort über das mindestens eine Auslassventil 24 abgeführt werden.

Ein Betrieb der Umschalteinrichtung 50 kann von einer Steuereinheit 52 gesteuert sein. Es ist auch möglich, dass die Steuereinheit 52 einen Betrieb der Zusatzventileinheit 18 steuert, wenn dieses beispielsweise separat betätigbar ist. Die Steuereinheit 52 kann in Kommunikationsverbindung mit der Umschalteinrichtung 50, der Zusatzventileinheit 18 und/oder einem Nockenwellenphasenversteller (nicht dargestellt) für die Nockenwelle 32 sein.

Beispielsweise kann die Steuereinheit 52 die Umschalteinrichtung 50 und/oder das Zusatzventil 18 in einem Kraftstoffzufuhrmodus betreiben. In dem Kraftstoffzufuhrmodus stellt die Umschalteinrichtung 50 eine Fluidverbindung zwischen dem Zusatzfluidkanal 40 und dem Kraftstoffzufuhrsystem 42 her. Die Zusatzventileinheit 18 öffnet sich beispielsweise im Einlasstakt zum Zuführen des Kraftstoffs von dem Kraftstoffzufuhrsystem 42 in die Verbrennungskammer 14. Der Kraftstoff kann zum Verbrennen in der Verbrennungskammer 14 zum Antreiben der Brennkraftmaschine dienen. Alternativ oder zusätzlich kann der Kraftstoff bspw. zum Zünden eines bereits in der Verbrennungskammer vorhandenen Kraftstoff-Luft-Gemischs dienen.

Die Steuereinheit 52 kann die Umschalteinrichtung 50 und/oder die Zusatzventileinheit 18 ebenfalls in einem Thermomanagementmodus (Abgastemperaturveränderungsmodus, insbesondere Abgastemperaturerhöhungsmodus) betreiben. Zum Beispiel kann zum Freibrennen eines Partikelfilters oder zum Betreiben eines Katalysators eine bestimmte (erhöhte) Abgastemperatur notwendig sein, die im Thermomanagementmodus erzielbar ist. Bspw. kann zum Erhöhen einer Abgastemperatur im Thermomanagementmodus eine Öffnung des mindestens einen Auslassventils 24 gegenüber einem Normalmodus vorgezogen sein, z. B. durch entsprechendes Einstellen eines Nockenwellenphasenverstellers (nicht dargestellt) für die Nockenwelle 32. Der Nockenwellenphasenversteller kann zum Beispiel von der Steuereinheit 52 gesteuert werden. Durch das phasenweise Vorziehen der Öffnung des Auslassventils 24 schließt dieses auf früher. Das restliche Abgas in der Verbrennungskammer 14 der Zylindereinheit 12 kann dann am Ende eines Auslasstaktes über die Zusatzventileinheit 18 zu dem Abgassystem 44 abgeführt werden, sodass dieses nicht komprimiert wird.

Die Steuereinheit 52 kann die Umschalteinrichtung 50 und/oder das Zusatzventil 18 auch in einem Drucklufterzeugungsmodus betreiben. In dem Drucklufterzeugungsmodus wird Druckluft aus der Verbrennungskammer 14 der Zylindereinheit 12 mittels der Zusatzventileinheit 18 entnommen und dem Druckluftsystem 46 zugeführt. Damit kann ein separater Luftverdichter für das Druckluftsystem entfallen oder zumindest weniger häufig oder weniger stark benutzt werden. Die Druckluft kann im Drucklufterzeugungsmodus beispielsweise während eines Kompressionstaktes der Zylindereinheit 12 entnommen werden. Die Zusatzventileinheit 18 kann zum Beispiel zu Beginn des Kompressionstaktes zum Verdichten von Luft zunächst geschlossen sein und dann geöffnet werden, zum Beispiel nach 1/4, 1/3, 1/2 usw. des Kompressionstaktes. Während des Drucklufterzeugungsmodus ist sicherzustellen, dass sich während des Kompressionstaktes kein Kraftstoff in der Verbrennungskammer 14 befindet, zum Beispiel dadurch, dass die entsprechende Zylindereinheit 12 abgeschaltet ist oder Kraftstoff erst kurz vor, zu Beginn und/oder während des Verbrennungstaktes zugeführt, zum Beispiel eingespritzt, wird.

### Bezugszeichenliste

- 10: Vorrichtung
- 12: Zylindereinheit
- 14: Verbrennungskammer
- 16: Ladungswechselventile
- 18: Zusatzventileinheit
- 20: Zylinderkopf
- 22: Einlassventil
- 24: Auslassventil
- 26: Kipphebel
- 28: Kipphebel
- 30: Nockenwelle
- 32: Nockenwelle
- 34: Ventilkörper
- 36: Kipphebel
- 38: Leerweg-Vorrichtung
- 40: Zusatzfluidkanal
- 42: Kraftstoffzufuhrsystem
- 44: Abgassystem
- 46: Druckluftsystem
- 48: Spülgassystem
- 50: Umschalteinrichtung
- 52: Steuereinheit

## Patentansprüche

1. Vorrichtung (10) für eine Brennkraftmaschine für ein Kraftfahrzeug, vorzugsweise ein Nutzfahrzeug, aufweisend:
mehrere Ladungswechselventile (16) zum Zuführen von Verbrennungsluft zu einer Verbrennungskammer (14) der Brennkraftmaschine und Abführen von Abgas aus der Verbrennungskammer (14);
ein erstes Fluidsystem, das als eines von einem Druckluftsystem (46), einem Abgassystem (44) oder einem Kraftstoffzufuhrsystem (42) ausgebildet ist;
ein zweites Fluidsystem, das als ein anderes von dem Druckluftsystem (46), dem Abgassystem (44) oder dem Kraftstoffzufuhrsystem (42) ausgebildet ist;
eine Zusatzventileinheit (18), mittels der eine Fluidverbindung zwischen der Verbrennungskammer (14) und dem ersten Fluidsystem und eine Fluidverbindung zwischen der Verbrennungskammer (14) und dem zweiten Fluidsystem herstellbar ist;
wobei die Zusatzventileinheit (18) mittels eines Hebels (36), vorzugsweise eines Kipphebels oder eines Schlepphebels, eines Ventiltriebs (28, 32, 36) betätigbar ist;
**dadurch gekennzeichnet, dass**
der Hebel (36) eine, vorzugsweise hydraulische, Leerweg-Vorrichtung (38) zum selektiven Zuschalten der Zusatzventileinheit (18) aufweist.

2. Vorrichtung (10) nach Anspruch 1, ferner aufweisend:
ein drittes Fluidsystem, das als ein weiteres anderes von dem Druckluftsystem (46), dem Abgassystem (44) oder dem Kraftstoffzufuhrsystem (42) ausgebildet ist, wobei mittels der Zusatzventileinheit (18) eine Fluidverbindung zwischen der Verbrennungskammer (14) und dem dritten Fluidsystem herstellbar ist; und/oder
ein weiteres Fluidsystem, das vorzugsweise als ein Spülgassystem (48) ausgebildet ist, wobei mittels der Zusatzventileinheit (18) eine Fluidverbindung zwischen der Verbrennungskammer (14) und dem weiteren Fluidsystem herstellbar ist.

3. Vorrichtung (10) nach Anspruch 1 oder Anspruch 2, ferner aufweisend:
eine Umschalteinrichtung (50), die zum wahlweisen Umschalten der Fluidverbindungen angeordnet ist.

4. Vorrichtung (10) nach Anspruch 3, wobei:
die Umschalteinrichtung (50) eines oder mehrere Ventile, vorzugsweise Schaltventile, aufweist.

5. Vorrichtung (10) nach einem der vorherigen Ansprüche, wobei:
das Druckluftsystem (46) zum Aufnehmen von über die Zusatzventileinheit (18) aus der Verbrennungskammer (14) entnommener Druckluft zum pneumatischen Antreiben und/oder Betätigen weiterer Komponenten, vorzugsweise des Kraftfahrzeugs, ausgebildet ist; und/oder
das Abgassystem (44) zum Aufnehmen und Abführen von über die Zusatzventileinheit (18) aus der Verbrennungskammer (14) entnommenem Abgas ausgebildet ist; und/oder.
das Kraftstoffzufuhrsystem (42) zum Zuführen von, vorzugsweise gasförmigem, Kraftstoff über die Zusatzventileinheit (18) zu der Verbrennungskammer (14) ausgebildet ist; und/oder
das Spülgassystem (48) zum Zuführen eines Spülgases zu der Zusatzventileinheit (18) und/oder der Umschalteinrichtung (50) ausgebildet ist.

6. Vorrichtung (10) nach einem der vorherigen Ansprüche, wobei:
die Zusatzventileinheit (18) in einem Zylinderkopf (20), vorzugsweise brennraumbündig oder in einem Sackloch zurückversetzt, angeordnet ist; und/oder
mittels der Zusatzventileinheit (18) eine Fluidverbindung zwischen der Verbrennungskammer (14) und einem Zusatzfluidkanal (40) in einem Zylinderkopf (20) herstellbar ist; und/oder
die mehreren Ladungswechselventile (16) in einem Zylinderkopf (20) angeordnet sind.

7. Vorrichtung (10) nach einem der vorherigen Ansprüche, wobei:
die Zusatzventileinheit (18) separat von den mehreren Ladungswechselventilen (16) ausgebildet ist; und/oder
die Zusatzventileinheit (18) ein einziges Ventil und/oder einen einzigen bewegbaren Ventilkörper (34) aufweist.

8. Vorrichtung (10) nach einem der vorherigen Ansprüche, wobei:
die Zusatzventileinheit (18) mittels eines Ventiltriebs (28, 32, 36) betätigbar ist, der ebenfalls mindestens eines der mehreren Ladungswechselventile (16) betätigt.

9. Vorrichtung (10) nach einem der vorherigen Ansprüche, wobei:
die Zusatzventileinheit (18) separat von den mehreren Ladungswechselventilen (16) betätigbar ist, vorzugsweise pneumatisch, elektrisch, hydraulisch und/oder mechanisch.

10. Vorrichtung (10) nach einem der vorherigen Ansprüche, ferner aufweisend:
eine Steuereinheit (52), die dazu ausgebildet ist, die Umschalteinrichtung (50) und/oder die Zusatzventileinheit (18) wahlweise zu betreiben in:
- einem Drucklufterzeugungsmodus, in dem Druckluft aus der Verbrennungskammer (14) mittels der Zusatzventileinheit (18) zu dem Druckluftsystem (46) zuführbar ist oder zugeführt wird; und/oder
- einem Thermomanagementmodus, in dem Abgas aus der Verbrennungskammer (14) mittels der Zusatzventileinheit (18) zu dem Abgassystem (44) zuführbar ist oder zugeführt wird; und/oder
- einem Kraftstoffzufuhrmodus, in dem Kraftstoff von dem Kraftstoffzufuhrsystem (42) in die Verbrennungskammer (14) mittels der Zusatzventileinheit (18) zuführbar ist oder zugeführt wird; und/oder
- einem Spülmodus, in dem Spülgas zu der Zusatzventileinheit (18) und/oder der Umschalteinrichtung (50) zum Spülen der Zusatzventileinheit (18) und/oder der Umschalteinrichtung (50) von dem Spülgassystem (48) zuführbar ist oder zugeführt wird.

11. Vorrichtung (10) nach Anspruch 10, wobei:
die Druckluft im Drucklufterzeugungsmodus während eines Kompressionstaktes aus der Verbrennungskammer (14) entnehmbar ist oder entnommen wird.

12. Vorrichtung (10) nach Anspruch 10 oder Anspruch 11, wobei im Thermomanagementmodus zur Erhöhung einer Abgastemperatur:
eine Öffnung mindestens eines Auslassventils (24) der mehreren Ladungswechselventile (16) gegenüber einem Normalmodus vorgezogen ist; und/oder
restliches Abgas in der Verbrennungskammer (14) am Ende eines Auslasstaktes über die Zusatzventileinheit (18) abführbar ist oder abgeführt wird.

13. Vorrichtung (10) nach einem der Ansprüche 10 bis 12, wobei:
im Kraftstoffzufuhrmodus ein, vorzugsweise gasförmiger, Kraftstoff, vorzugsweise im Einlasstakt, zu der Verbrennungskammer (14) mittels der Zusatzventileinheit (18) zugeführt wird oder zuführbar ist, zum Zünden und/oder Verbrennen in der Verbrennungskammer (14).

14. Kraftfahrzeug, vorzugsweise Nutzfahrzeug, mit einer Vorrichtung (10) nach einem der vorherigen Ansprüche.

## Claims

1. A device (10) for an internal combustion engine for a motor vehicle, preferably a commercial vehicle, comprising:
a plurality of charge exchange valves (16) for supplying combustion air to a combustion chamber (14) of the internal combustion engine and discharging exhaust gas from the combustion chamber (14) ;
a first fluid system which is designed as one of a compressed-air system (46), an exhaust-gas system (44) or a fuel supply system (42);
a second fluid system which is designed as another of the compressed-air system (46), the exhaust-gas system (44) or the fuel supply system (42); and
an auxiliary valve unit (18) by means of which a fluid connection can be established between the combustion chamber (14) and the first fluid system, and a fluid connection can be established between the combustion chamber (14) and the second fluid system;
wherein the auxiliary valve unit (18) can be actuated by means of a lever (36), preferably a rocker lever or a finger-type rocker, of a valve drive (28, 32, 36);
**characterized in that**
the lever (36) has a, preferably hydraulic, lost-motion device (38) for selectively activating the auxiliary valve unit (18).

2. The device (10) according to Claim 1, further comprising:
a third fluid system which is designed as a further other of the compressed-air system (46), the exhaust-gas system (44) or the fuel supply system (42), wherein a fluid connection can be established between the combustion chamber (14) and the third fluid system by means of the auxiliary valve unit (18); and/or
a further fluid system which is preferably designed as a scavenging-gas system (48), wherein a fluid connection can be established between the combustion chamber (14) and the further fluid system by means of the auxiliary valve unit (18).

3. The device (10) according to Claim 1 or Claim 2, further comprising:
a switching device (50) which is arranged for selectively switching the fluid connections.

4. The device (10) according to Claim 3, wherein:
the switching device (50) has one or more valves, preferably switching valves.

5. The device (10) according to one of the preceding claims, wherein:
the compressed-air system (46) is designed to receive compressed air, which is taken from the combustion chamber (14) via the auxiliary valve unit (18), for pneumatically driving and/or actuating further components, preferably of the motor vehicle; and/or
the exhaust-gas system (44) is designed to receive and discharge exhaust gas which is taken from the combustion chamber (14) via the auxiliary valve unit (18); and/or
the fuel supply system (42) is designed to supply, preferably gaseous, fuel to the combustion chamber (14), via the auxiliary valve unit (18); and/or
the scavenging-gas system (48) is designed to supply a scavenging gas to the auxiliary valve unit (18) and/or the switching device (50).

6. The device (10) according to one of the preceding claims, wherein:
the auxiliary valve unit (18) is arranged in a cylinder head (20), preferably flush with the combustion chamber or set back in a blind hole; and/or
a fluid connection can be established between the combustion chamber (14) and an auxiliary fluid duct (40) in a cylinder head (20) by means of the auxiliary valve unit (18); and/or
the plurality of charge exchange valves (16) are arranged in a cylinder head (20).

7. The device (10) according to one of the preceding claims, wherein:
the auxiliary valve unit (18) is formed separately from the plurality of charge exchange valves (16); and/or
the auxiliary valve unit (18) has a single valve and/or a single movable valve body (34).

8. The device (10) according to one of the preceding claims, wherein:
the auxiliary valve unit (18) can be actuated by means of a valve drive (28, 32, 36) which also actuates at least one of the plurality of charge exchange valves (16).

9. The device (10) according to one of the preceding claims, wherein:
the auxiliary valve unit (18) can be actuated separately from the plurality of charge exchange valves (16), preferably pneumatically, electrically, hydraulically and/or mechanically.

10. The device (10) according to one of the preceding claims, further comprising:
a control unit (52) which is designed to selectively operate the switching device (50) and/or the auxiliary valve unit (18) in:
- a compressed-air-generating mode in which compressed air can be or is supplied from the combustion chamber (14) to the compressed-air system (46) by means of the auxiliary valve unit (18); and/or
- a thermal management mode in which exhaust gas can be or is supplied from the combustion chamber (14) to the exhaust-gas system (44) by means of the auxiliary valve unit (18); and/or
- a fuel supply mode in which fuel can be or is supplied from the fuel supply system (42) into the combustion chamber (14) by means of the auxiliary valve unit (18); and/or
- a scavenging mode in which scavenging gas can be or is supplied from the scavenging-gas system (48) to the auxiliary valve unit (18) and/or the switching device (50) for scavenging the auxiliary valve unit (18) and/or the switching device (50).

11. The device (10) according to Claim 10, wherein:
in the compressed-air-generating mode, the compressed air can be or is taken from the combustion chamber (14) during a compression cycle.

12. The device (10) according to Claim 10 or Claim 11, wherein, in the thermal management mode, to increase an exhaust-gas temperature:
an opening of at least one outlet valve (24) of the plurality of charge exchange valves (16) is advanced with respect to a normal mode; and/or
residual exhaust gas in the combustion chamber (14) can be or is discharged via the auxiliary valve unit (18) at the end of an exhaust cycle.

13. The device (10) according to one of Claims 10 to 12, wherein:
in the fuel supply mode, a, preferably gaseous, fuel is or can be supplied, preferably in the intake cycle, to the combustion chamber (14) by means of the auxiliary valve unit (18) for the purpose of ignition and/or combustion in the combustion chamber (14) .

14. A motor vehicle, preferably a commercial vehicle, having a device (10) according to one of the preceding claims.

## Revendications

1. Dispositif (10) pour un moteur à combustion interne pour un véhicule automobile, de préférence un véhicule utilitaire, présentant :
plusieurs soupapes d'échange de charge (16) pour amener de l'air de combustion à une chambre de combustion (14) du moteur à combustion interne et pour évacuer du gaz d'échappement de la chambre de combustion (14) ;
un premier système de fluide, qui est réalisé sous la forme d'un parmi un système d'air comprimé (46), un système de gaz d'échappement (44) ou un système d'amenée de carburant (42) ;
un deuxième système de fluide, qui est réalisé sous la forme d'un autre parmi le système d'air comprimé (46), le système de gaz d'échappement (44) ou le système d'amenée de carburant (42) ;
une unité de soupape supplémentaire (18), au moyen de laquelle une communication fluidique peut être établie entre la chambre de combustion (14) et le premier système de fluide et une communication fluidique peut être établie entre la chambre de combustion (14) et le deuxième système de fluide ;
l'unité de soupape supplémentaire (18) pouvant être actionnée au moyen d'un levier (36), de préférence d'un levier basculant ou d'un levier entraîneur, d'un mécanisme de commande de soupape (28, 32, 36) ; **caractérisé en ce que**
le levier (36) présente un dispositif de course à vide (38), de préférence hydraulique, pour la mise en circuit sélective de l'unité de soupape supplémentaire (18) .

2. Dispositif (10) selon la revendication 1, présentant en outre :
un troisième système de fluide, qui est réalisé sous la forme d'encore un autre parmi le système d'air comprimé (46), le système de gaz d'échappement (44) ou le système d'amenée de carburant (42), une communication fluidique entre la chambre de combustion (14) et le troisième système de fluide pouvant être établie au moyen de l'unité de soupape supplémentaire (18) ; et/ou
un autre système de fluide, qui est de préférence réalisé sous la forme d'un système de gaz de balayage (48), une communication fluidique entre la chambre de combustion (14) et l'autre système de fluide pouvant être établie au moyen de l'unité de soupape supplémentaire (18) .

3. Dispositif (10) selon la revendication 1 ou la revendication 2, présentant en outre :
un appareil de commutation (50), qui est agencé pour commuter sélectivement les communications fluidiques.

4. Dispositif (10) selon la revendication 3, dans lequel :
l'appareil de commutation (50) présente une ou plusieurs soupapes, de préférence soupapes de commutation.

5. Dispositif (10) selon l'une quelconque des revendications précédentes, dans lequel :
le système d'air comprimé (46) est réalisé pour recevoir de l'air comprimé extrait de la chambre de combustion (14) par l'intermédiaire de l'unité de soupape supplémentaire (18) pour l'entraînement et/ou l'actionnement pneumatique d'autres composants, de préférence du véhicule automobile ; et/ou
le système de gaz d'échappement (44) est réalisé pour recevoir et évacuer du gaz d'échappement extrait de la chambre de combustion (14) par l'intermédiaire de l'unité de soupape supplémentaire (18) ; et/ou
le système d'amenée de carburant (42) est réalisé pour amener du carburant, de préférence gazeux, à la chambre de combustion (14) par l'intermédiaire de l'unité de soupape supplémentaire (18) ; et/ou
le système de gaz de balayage (48) est réalisé pour amener un gaz de balayage à l'unité de soupape supplémentaire (18) et/ou à l'appareil de commutation (50) .

6. Dispositif (10) selon l'une quelconque des revendications précédentes, dans lequel :
l'unité de soupape supplémentaire (18) est agencée dans une culasse (20), de préférence en affleurement de la chambre de combustion ou décalée vers l'arrière dans un trou borgne ; et/ou
une communication fluidique peut être établie entre la chambre de combustion (14) et un canal de fluide supplémentaire (40) dans une culasse (20) au moyen de l'unité de soupape supplémentaire (18) ; et/ou
les plusieurs soupapes d'échange de charge (16) sont agencées dans une culasse (20).

7. Dispositif (10) selon l'une quelconque des revendications précédentes, dans lequel :
l'unité de soupape supplémentaire (18) est réalisée séparément des plusieurs soupapes d'échange de charge (16) ; et/ou
l'unité de soupape supplémentaire (18) présente une seule soupape et/ou un seul corps de soupape mobile (34).

8. Dispositif (10) selon l'une quelconque des revendications précédentes, dans lequel :
l'unité de soupape supplémentaire (18) peut être actionnée au moyen d'un mécanisme de commande de soupape (28, 32, 36) qui actionne également au moins l'une des plusieurs soupapes d'échange de charge (16).

9. Dispositif (10) selon l'une quelconque des revendications précédentes, dans lequel :
l'unité de soupape supplémentaire (18) peut être actionnée séparément des plusieurs soupapes d'échange de charge (16), de préférence de manière pneumatique, électrique, hydraulique et/ou mécanique.

10. Dispositif (10) selon l'une quelconque des revendications précédentes, présentant en outre :
une unité de commande (52), qui est réalisée pour faire fonctionner sélectivement l'appareil de commutation (50) et/ou l'unité de soupape supplémentaire (18) dans :
- un mode de production d'air comprimé, dans lequel de l'air comprimé provenant de la chambre de combustion (14) peut être amené ou est amené au système d'air comprimé (46) au moyen de l'unité de soupape supplémentaire (18) ; et/ou
- un mode de gestion thermique, dans lequel du gaz d'échappement provenant de la chambre de combustion (14) peut être amené ou est amené au système de gaz d'échappement (44) au moyen de l'unité de soupape supplémentaire (18) ; et/ou
- un mode d'amenée de carburant, dans lequel du carburant peut être amené ou est amené à partir du système d'amenée de carburant (42) dans la chambre de combustion (14) au moyen de l'unité de soupape supplémentaire (18) ; et/ou
- un mode de balayage, dans lequel du gaz de balayage peut être amené ou est amené à l'unité de soupape supplémentaire (18) et/ou à l'appareil de commutation (50) pour balayer l'unité de soupape supplémentaire (18) et/ou l'appareil de commutation (50) à partir du système de gaz de balayage (48).

11. Dispositif (10) selon la revendication 10, dans lequel :
l'air comprimé dans le mode de production d'air comprimé peut être extrait ou est extrait de la chambre de combustion (14) pendant une phase de compression.

12. Dispositif (10) selon la revendication 10 ou la revendication 11, dans lequel, dans le mode de gestion thermique, pour augmenter une température de gaz d'échappement :
l'ouverture d'au moins une soupape de déchargement (24) parmi les plusieurs soupapes d'échange de charge (16) est avancée par rapport à un mode normal ; et/ou
du gaz d'échappement résiduel dans la chambre de combustion (14) peut être évacué ou est évacué à la fin d'une phase de déchargement par l'intermédiaire de l'unité de soupape supplémentaire (18).

13. Dispositif (10) selon l'une quelconque des revendications 10 à 12, dans lequel :
dans le mode d'amenée de carburant, un carburant, de préférence gazeux, de préférence en phase d'admission, est amené ou peut être amené à la chambre de combustion (14) au moyen de l'unité de soupape supplémentaire (18), pour l'allumage et/ou la combustion dans la chambre de combustion (14).

14. Véhicule automobile, de préférence véhicule utilitaire, avec un dispositif (10) selon l'une quelconque des revendications précédentes.
